# EUROPÄISCHE PATENTSCHRIFT

(11) **EP 4 173 939 B1**
(45) Veröffentlichungstag und Bekanntmachung des Hinweises auf die Patenterteilung: **02.07.2025**
(21) Anmeldenummer: 21204804.5
(22) Anmeldetag: 26.10.2021
(51) Int. Cl.: B62K 21/16, B62K 19/16

(54) **VORRICHTUNG ZUR VERBINDUNG EINES FAHRRANDLENKERS MIT EINEM STEUERKOPF**
DEVICE FOR CONNECTING BICYCLE HANDLEBARS WITH A STEERING HEAD
DISPOSITIF DE RACCORDEMENT D'UN GUIDON À UNE TÊTE DE DIRECTION

(43) Veröffentlichungstag der Anmeldung: 03.05.2023
(73) Patentinhaber: Trentmann GmbH & Co. KG, 49186 Bad Iburg (DE)
(72) Erfinder: Trentmann, Frank, 49196 Bad Laer (DE)
(74) Vertreter: Weeg, Thomas

(56) Entgegenhaltungen:
- WO-A1-01/68441
- WO-A1-2009/026721
- DE-U1- 202019 103 448
- FR-A1- 3 037 033
- GB-A- 2 475 445
- US-B2- 8 172 247

## Beschreibung

Die vorliegende Erfindung bezieht sich auf eine Vorrichtung zur Verbindung eines aus einem faserverstärkten Kunststoff hergestellten Fahrradlenkers mit einem fahrradseitig zu montierenden Steuerkopf nach dem Oberbegriff des Anspruchs 1.

Aus der Schrift EP 2 829 465 A1 ist ein aus einem faserverstärkten Kunststoff hergestellter Fahrradlenker bekannt. Der Fahrradlenker hat über seine Länge eine runde Querschnittsform und wird auf herkömmliche Weise an einem Vorbau eines Fahrrads befestigt, indem der Lenker in eine das Lenkerrohr von außen umfassende Klemmvorrichtung eingespannt wird.

Aus der Schrift DE 102 10 094 A1 ist ein verstellbarer Lenkervorbau bekannt, der zwei Schwenkgelenke aufweist, um den Fahrradlenker in der Höhe und Ausladung des Vorbaus zu verstellen. Auch dieser Fahrradlenker ist auf herkömmliche Weise mittels einer Klemmschelle mit dem Lenkervorbau verbunden. Der Lenkervorbau bildet einen Steuerkopf, mit dem Lenkimpulse aus dem Lenker auf die Vorderradgabel übertragen werden. Es ist ein schwenkbeweglicher Arm offenbart, der die Klemmschelle und den darin gehaltenen Fahrradlenker mit dem Vorbau verbindet und der an jedem Schwenkgelenk besonders festgelegt werden muss, um sich nicht während der Fahrt zu verstellen. Das Stützgewicht des Benutzers und die Stöße aus dem Vorderrad bei der Fahrt belasten voll die Schwenkgelenke.

Aus der Schrift DE 20 2019 103 448 U1 ist eine gattungsgemäße Lenker-Vorbau-Einheit eines Fahrradlenkers bekannt. Es wird ausgeführt, wie der Lenker mit dem Vorbau auf eine günstige Weise verbunden werden kann. Weitere gattungsgemäße Lenker sind aus der Schrift US 8,172,247 B2 und GB 2 475 445 A bekannt. Dort sind Aero-Lenker offenbart, auf denen seitlich versetzt und in einem Abstand zum Steuerkopf verstellbare Aero-Lenkeraufsätze auf die Lenkerarme aufgesockelt sind. Die Lenkerarme neben dem Steuerkopf haben zwar eine Flügelquerschnittsform mit einem von einer Außenwand begrenzten Hohlraum, die Hohlräume selbst weist aber keine weiteren Unterteilungen auf. In der Schrift WO 01/68441 ist ein Lenkerbausatz mit einem Steuerkopf gezeigt, an dessen äußeren Seiten Griffstücke aufsetzbar sind.

Da der Mittelabschnitt dazu dient, die Kräfte aus dem Vorderrad auf den Fahrradlenker und die Lenkkräfte und Stützlasten des Benutzers auf den Fahrradrahmen zu übertragen, ist der Mittelabschnitt das am stärksten belastete Bauteil des Lenkers. Der Lenkervorbau als Steuerkopf dient dem Zweck, den Gabelschaft der Vorderradgabel mit dem Fahrradlenker zu verbinden. Der Lenkervorbau muss die Lenkkräfte aus dem Fahrradlenker auf das Vorderrad übertragen, der Lenkervorbau überträgt aber auch Kräfte aus dem Vorderrad in den Fahrradlenker, beispielsweise auch Stöße, die beim Fahren auf die Lenkstange übertragen werden. Hinzu kommen die Kräfte, mit denen sich ein Benutzer des Fahrrads auf dem Lenker abstützt. Um diese Kräfte sicher und dauerhaft übertragen zu können, muss die Verbindung des Vorbaus mit dem Lenker sehr stabil ausgeführt werden.

Die Notwendigkeit einer stabilen und hoch belastbaren Verbindung des Fahrradlenkers mit dem Vorbau stellt sich in besonderer Weise bei einem Fahrradlenker, dessen tragende Teile aus einem Kunststoff hergestellt sind. Da Kunststoffmaterialien bei gleichem Materialeinsatz weniger mechanisch belastbar sein können als ein metallischer Werkstoff, ist es erforderlich, Maßnahmen zu ergreifen, durch die die Bauteilfestigkeit und die Dauerhaltbarkeit des Fahrradlenkers sowie seine Verbindung mit dem übrigen Fahrrad auf einem Niveau gehalten werden, bei dem das Fahrgefühl und die Fahrsicherheit dem von herkömmlichen Stahl-Fahrradlenkern bekannten Niveau zumindest entsprechen. Dafür reichen aber die herkömmlichen Klemmschellen, über die ein Fahrradlenker mit einem Steuerkopf verbunden wird, nicht aus. Die Klemmschellen müssen einen hohen Anpressdruck erzeugen, um einen Fahrradlenker ausreichend fest in seiner Einbaulage zu halten. Auch wenn ein faserverstärkter Kunststoff als Werkstoff für den Mittelabschnitt verwendet wird, kann dieser aber dem hohen Druck, der von den herkömmlichen Klemmschellen erzeugt wird, zumindest leicht elastisch nachgeben, insbesondere auch über die Zeit als Setzbewegung. Da sich der Fahrradlenker dann in seiner Halterung lockert und bei auftretenden Lastspitzen plötzlich wegdrehen kann, ergeben sich daraus Unfallgefahren für den Benutzer. Zudem treten auch unmittelbar benachbart zu den Kontaktflächen der Klemmschelle im Kunststoffmaterial des Fahrradlenkers hohe Lastspitzen auf, denen das Material bei einer langen Gebrauchsdauer und einer großen Zahl von Lastwechseln nicht gewachsen sein könnte.

Es ist die Aufgabe der vorliegenden Erfindung, eine Vorrichtung zur Verbindung eines aus einem faserverstärkten Kunststoff hergestellten Fahrradlenkers mit einem fahrradseitig zu montierenden Steuerkopf vorzuschlagen, der eine bessere Kraftübertragung zwischen Fahrradlenker und Steuerkopf ermöglicht.

Die Aufgabe wird für einen gattungsgemäßen Fahrradlenker mit den kennzeichnenden Merkmalen des Anspruchs 1 gelöst.

Durch diese Anordnung entsteht eine Abstützvorrichtung, bei der die auftretenden Kräfte zumindest überwiegend in ihrer Wirkrichtung flächig übertragen werden. Anders als bei den herkömmlichen Klemmschellen wirken die Haltekräfte nicht um den runden Umfang eines Lenkerrohres herum, woraus sich eine ungünstige Kraftverteilung ergibt, sondern die nach unten wirkenden Abstützkräfte aus dem Gewicht des Benutzers, der sich auf dem Fahrradlenker abstützt, werden von der zweiten Verspannungsfläche auf der Oberseite des Steuerkopfes flächig aufgefangen und in den Fahrradrahmen und das Gabelrohr abgeleitet. Bei der flächigen Abstützung auf der zweiten Verspannungsfläche, die zumindest überwiegend waagerecht ausgerichtet ist, entstehen am Fahrradlenker im Bereich der Halterung keine oder allenfalls geringe rotatorische Kräfte. Die Stoßkräfte aus dem Vorderrad werden auf die erste Verspannungsfläche übertragen, die ebenfalls zumindest überwiegend waagerecht ausgerichtet ist. Auch hier steht den einwirkenden Stoßkräften eine flächige Abstützung entgegen, gegen die die Stoßkräfte in einem stumpfen oder genau senkrechten Winkel einwirken. Der Kraftfluss zwischen dem Fahrradlenker und der Vorderradgabel sowie dem Fahrradrahmen wird durch die erfindungsgemäß ausgestaltete Vorrichtung zur Verbindung eines Fahrradlenkers mit einem Steuerkopf also ideal ausgestaltet. Die mechanische Beanspruchung des Kunststoffmaterials im Fahrradlenker wird dadurch im Verbindungsbereich auf einem möglichst niedrigen Niveau gehalten.

Um Relativbewegungen zwischen dem Fahrradlenker und dem Steuerkopf möglichst gering zu halten, werden beide Teile durch ein Spannmittel mit einer Spannkraft aufeinander gepresst gehalten. Als Spanmittel kommen insbesondere formschlüssige Halterungen in Betracht, die den Fahrradlenker spielfrei auf dem Steuerkopf halten und eine Abhebebewegung des Fahrradlenkers von dem Steuerkopf blockieren. Hier kommen verschiedene Lösungen in Betracht, wie Schienenhalterungen, Kniehebel, Spannschrauben, Riegel und dergleichen. Der Halt kann zusätzlich verbessert werden, denn die beiden Teile auch kraftschlüssig aufeinander gehalten sind. Der Kraftschluss kann durch geeignet gestaltete Oberflächen günstig beeinflusst werden. Selbst wenn es aber während über die Gebrauchsdauer des Fahrrads dazu kommen sollte, dass sich zwischen dem Fahrradlenker und dem Steuerkopf ein leichtes Spiel ergibt, besteht keine Gefahr, dass der Fahrradlenker plötzlich und unerwartet in einem Spitzenlastfall wegdreht, es ergeben sich allenfalls leichte Hubbewegungen zwischen dem Fahrradlenker und dem Steuerkopf, die auch schon beim normalen Gebrauch erkannt werden können. Trotz der leichten Hubbewegungen bleibt die Abstützung des Benutzers auf dem Steuerkopf gerade in kritischen Spitzenlastfällen voll erhalten, weil die Verspannungsflächen unter Einwirkung der Stützlast des Benutzers oder bei Stößen aus dem Vorderrad auch ohne Einwirkung des Spannmittels aufeinander gepresst werden und dadurch die Abstützwirkung voll erhalten bleibt. Zudem würde sich ein Spiel zwischen den beiden Teilen über die Zeit nur langsam entwickeln, sodass ein Benutzer die Möglichkeit hat, das Spiel zu erkennen und darauf durch ein Nachspannen der Verbindung zu reagieren. Dadurch ist die erfindungsgemäße Vorrichtung für den Benutzer viel sicherer als die herkömmliche Technik.

Die Abstützwirkung der interagierenden Verspannungsflächen ergibt sich insbesondere, wenn sie eine zumindest überwiegend waagerecht ausgerichtete Kontaktebene ausbilden. Da sowohl die Stützlast des sich auf dem Fahrradlenker abstützenden Benutzers als auch die Stoßkräfte aus dem Vorderrad als die hauptsächlich zu übertragenden Kräfte in einer im Wesentlichen vertikalen Richtung wirken, ergeben sich stumpfe oder senkrechte Auftreffwinkel der einwirkenden Kräfte auf die Verspannungsflächen, bei denen die einwirkenden Kräfte besonders effektiv auf das andere Bauteil übertragen werden, ohne dass dabei irgendwelche störenden rotatorischen Kräfte oder Torsionkräfte auftreten.

Die Verspannungsfläche kann plan ausgebildet sein, sie kann aber auch Erhebungen aufweisen, um eine bessere Verzahnung mit dem steuerkopfseitigen Koppelteil und der dort ausgebildeten Verspannungsfläche zu ermöglichen.

Die Lenkerarme weisen jeweils abschnittweise einen teilweise oder vollständig umschlossenen Hohlraum mit über den Profilquerschnitt unterschiedlich dicken Wandstärken der Außenwände auf. Die Lenkerarme können in Bereichen, in denen sie stark belastet sind, massiv oder nahezu massiv ausgeführt werden, um dort eine ausreichende Stabilität zu erhalten. In anderen, insbesondere in weniger stark belasteten Bereichen, können aber auch Hohlräume im Inneren der Lenkerarme ausgebildet sein. Dort ist es durch die unterschiedlich dicken Wandstärken möglich, den Fahrradlenker von seiner Konstruktion und Bauweise her noch besser an die im täglichen Gebrauch auftretenden Lastkollektive anzupassen. Der Fahrradlenker kann dadurch leichter gehalten werden, und es wird nur so viel Material für die Herstellung eines Fahrradlenkers verbraucht, wie es für seinen Gebrauch und die dabei auftretenden Lastkollektive zwingend erforderlich ist. Über Finite-Elemente-Rechnungen und die daraus resultierenden Bauteiloptimierungen kann ein Fahrradlenker aus Kunststoff genau so ausgelegt werden, dass er die technischen Belastungsparameter genau einhält. Die im Fahrradlenker im Bereich der Lenkerarme ausgebildeten Hohlräume können dazu genutzt werden, darin elektrische und/oder mechanische Komponenten einzubauen. Bei den Komponenten kann es sich um Bowdenzüge, Kabel, Batterien, Bordrechner und dergleichen handeln.

Mit dem Begriff des Mittelabschnitts ist der mittlere Abschnitt des Fahrradlenkers gemeint, über den der Fahrradlenker mit dem Steuerkopf des Fahrrads verbunden ist. Mit den Lenkerarmen sind die seitlichen Ausleger gemeint, die in seitlicher Richtung vom Mittelabschnitt abstehen. Dabei ist es nicht zwingend erforderlich, dass sich die einteilig mit dem Mittelabschnitt verbundenen Lenkerarme bis in den Griffbereich erstrecken. Der jeweilige Lenkerarm kann durch ein oder mehrere separate Anbauteile verlängert sein.

Nach einer Ausgestaltung der Erfindung ist der Mittelabschnitt mit der ersten Verspannungsfläche in verschiedenen Positionen entlang der Kontaktebene auf der zweiten Verspannungsfläche aufsetzbar, wobei sich in den verschiedenen Positionen die Verspannungsflächen in unterschiedlichen Flächenbereichen überlappen. Damit die erste Verspannungsfläche in verschiedenen Positionen entlang der Längserstreckungsrichtung der Kontaktebene auf der zweiten Verlagerungsfläche aufsetzbar ist, muss zumindest eine der Verspannungsflächen eine Länge in der Längserstreckungsrichtung der Kontaktebene aufweisen, die länger ist als die Länge der anderen Verspannungsvorrichtung in der Längserstreckungsrichtung der Kontaktebene, oder beide Verspannungsflächen sind zwar in Längserstreckungsrichtung der Kontaktebene gleich lang, aber länger, als es erforderlich wäre, um die auftretenden und zu übertragenden Kräfte zuverlässig und sicher in nur einer einzigen Position von einem auf das andere Bauteil zu übertragen. Die überdimensionierte Länge von zumindest einer der beiden Verspannungsflächen in der Längserstreckungsrichtung der Kontaktebene macht es möglich, den Mittelabschnitt in verschiedenen Positionen auf dem Steuerkopf aufzusetzen und dort in einer ausgewählten Position für den Gebrauch des Fahrrads festzulegen. Dabei werden auch in der Position des Mittelabschnitts, in der dieser im Verhältnis zum Steuerkopf in der Längserstreckungsrichtung am weitesten in eine Richtung zum Steuerkopf entfernt oder darauf zu verlagert ist, die möglich ist, die auftretenden Kräfte noch immer zuverlässig und sicher übertragen. Sind die Verspannungsflächen auf dem Fahrrad genau waagerecht ausgerichtet, bedeutet eine Montage des Mittelabschnitts in unterschiedlichen Positionen jeweils immer nur eine Verlagerung des Fahrradlenkers in Längserstreckungsrichtung des Fahrrads. Sind die Verspannungsflächen aber nicht genau waagerecht ausgerichtet, sondern liegt die Kontaktebene in einer Winkellage zur Waagerechten, so stellt sich bei unterschiedlichen Positionen des Mittelabschnitts auf dem Steuerkopf auch eine unterschiedliche Höhe des Fahrradlenkers am Fahrrad ein. Auf diese Weise kann der Fahrradlenker nicht nur in Längserstreckungsrichtung des Fahrrads, sondern auch in der Höhe verstellt werden.

Nach einer Ausgestaltung der Erfindung weisen die Verspannungsflächen eine zueinander kongruente Verrippung auf, die sich in einer Richtung quer zur Längserstreckungsrichtung des Fahrrads erstreckt. Die Verrippung ermöglicht eine Verzahnung der Verspannungsflächen ineinander, wenn der Mittelabschnitt auf den Steuerkopf aufgelegt ist. Durch die Verrippung ist die Vorrichtung besser dazu in der Lage, Schub- und Zugkräfte, die in Längserstreckungsrichtung des Fahrrads auf den Fahrradlenker einwirken, von einem Bauteil auf das andere zu übertragen. Die Verrippung quer zur Längserstreckungsrichtung verringert auch die Neigung des Fahrradlenkers, sich ohne eine Schwenkbewegung des Gabelschafts der Vorderradgabel um deren Drehachse zu drehen, wenn der Lenker wechselweise an seinen gegenüberliegenden Enden auf Zug oder Druck belastet wird, wie es bei einer starken Tretbewegung eines Radfahrers der Fall sein kann.

Nach einer Ausgestaltung der Erfindung sind die Verspannungsflächen in der Kontaktebene geschlossen ausgeführt. Durch die geschlossene Ausführung kann die gesamte Verspannungsfläche dazu genutzt werden, die einwirkenden Kräfte zu übertragen.

Nach einer Ausgestaltung der Erfindung ist der Steuerkopf von einer Spannschraube auf dem Gabelschaft verspannt gehalten. Um den Steuerkopf spielfrei und ausreichend fest mit dem Gabelschaft zu verbinden, ist es vorteilhaft, nur den Steuerkopf direkt mit dem Gabelschaft zu verbinden. Dies erfolgt auf einfache Weise mit einer Spannschraube. Der Steuerkopf wird dann an anderer Stelle mit dem Mittelabschnitt des Fahrradlenkers verbunden.

Nach einer Ausgestaltung der Erfindung weist der Steuerkopf zumindest ein weiteres Spannmittel auf, mit dem der Steuerkopf quer und seitlich versetzt zur Drehachse der Vorderradgabel auf dem Gabelschaft verspannt ist. Durch die zusätzliche Verspannung mit einer Spannkraft quer zur Drehachse der Vorderradgabel ist der Steuerkopf zusätzlich in seiner Einbauposition gegen Torsionsbewegungen des Steuerkopfs um den Gabelschaft herum fixiert. Im Bereich des weiteren Spannmittels ist der Steuerkopf wie eine Spannschelle gestaltet, die um den Gabelschaft herum gegen diesen verspannt wird. Dazu weist der Steuerkopf eine hohlzylindrische Ausformung auf, mit der er auf das nach oben ragende Ende des Gabelschafts aufgesetzt werden kann. Die Innenfläche der hohlzylindrischen Ausformung bildet eine Verspannungsfläche, mit der der Steuerkopf auf den Gabelschaft aufgespannt wird.

Nach einer Ausgestaltung der Erfindung sind der Mittelabschnitt und der Steuerkopf durch zumindest eine Spannschraube miteinander verschraubt, die die Verspannungsflächen durchgreift. Durch die Zugwirkung der Spannschaube und ihrer Platzierung auf eine Weise, bei der sie die Verspannungsflächen durchgreift, werden die Verspannungsflächen unmittelbar im Umgebungsbereich der Spannschraube aufeinandergepresst gehalten. Es können auch mehrere Spannschrauben vorgesehen sein, um die Verspannungsflächen aufeinander gepresst zu halten.

Nach einer Ausgestaltung der Erfindung weist der Mittelabschnitt und/oder der Steuerkopf ein Langloch auf, das sich in Längserstreckungsrichtung des Fahrrads erstreckt, und das Langloch ist von der Spannschraube durchgriffen, mit der der Mittelabschnitt und der Steuerkopf miteinander verschraubt sind. Das Langloch erlaubt es, den Mittelabschnitt in einer unterschiedlichen Position entlang der Längserstreckungsrichtung der Kontaktebene und des Fahrrads auf dem Steuerkopf anzuordnen.

Nach einer Ausgestaltung der Erfindung sind der Mittelabschnitt und die Lenkerarme als einteiliges Formteil aus einem faserverstärkten Kunststoff hergestellt, der einen Faser-Volumenanteil von mindestens 50 % aufweist.

Durch die Ausbildung als einteiliges Formteil werden Relativbewegungen zwischen mehreren Bauteilen im Bereich der Schnittstellen zwischen den Bauteilen vermieden. Das Dämpfungsverhalten des Fahrradlenkers hinsichtlich von Vibrationen und Stößen des Vorderrads ist homogen und gleichbleibend. Das einteilige Formteil wird von seiner Ausformung des Raumköpers her so gestaltet, dass es die auf die Lenkerarme einwirkenden Stützkräfte und Lenkimpulse des Benutzers gut auf den Steuerkopf überträgt. Durch die einteilige Ausführung werden auch Rückmeldungen des Vorderrads an den Benutzer über darauf einwirkende Kräfte nicht über Schnittstellen zwischen verschieden steif ausgelegten Bauteilen verwässert.

Wesentlich für die zufrieden stellende Funktion des aus einem Kunststoff hergestellten Fahrradlenkers ist neben der Einteiligkeit des Mittelabschnitts mit den Lenkerarmen auch, dass der verwendete Kunststoff eine ausreichende Festigkeit aufweist. Das ist der Fall, wenn dieser einen Faser-Volumenanteil von mindestens 50 % aufweist. Durch den hohen Faseranteil erhält der verwendete Kunststoff eine Festigkeit, die benötigt wird, um ein schwammiges Lenkgefühl zu vermeiden. Für die Festigkeit ist dabei weniger ausschlaggebend, welche Faserart verwendet ist. Bei den verwendeten Fasern kann es sich um Glas-, Karbon-, Aramid-, Kevlar- oder natürliche Fasern wie beispielsweise Flachs-, Ramie- oder Hanffasern handeln. Die Fasern können in Wirrlage, als Gewebe oder Gewirk in den Formkörper eingearbeitet sein. Sie können in Reinform in das Werkzeug zur Herstellung des Fahrradlenkers eingelegt sein, als vorgeformtes Prepreg, und/oder die Fasern sind in die Kunststoffmasse eingemischt, die in das Werkzeug zur Herstellung des Fahrradlenkers eingeleitet wird. Dabei können die Fasern auch in gleichen oder unterschiedlichen Längen verarbeitet sein. Als Kunststoff, in den die Fasern eingebettet sind, können insbesondere Thermoplaste und Duroplaste verwendet werden, die als Werkstoffe häufig über eine größere Härte verfügen als Weichplastik-Kunststoffe.

Der als einteiliges Formteil ausgebildete Mittelabschnitt mit den davon seitlich abstehenden Lenkerarmen kann als einstückiges Kunststoffspritzgussteil hergestellt werden. Über ein entsprechend gestaltetes Werkzeug können kostengünstig große Stückzahlen von Fahrradlenkern hergestellt werden.

Nach einer Ausgestaltung der Erfindung weist der Mittelabschnitt einen unrunden Profilquerschnitt auf, und im unrunden Profilquerschnitt sind in Hauptbelastungsrichtung wirkende Versteifungsrippen ausgebildet, die dazwischen befindliche Hohlräume begrenzen. So können beispielsweise eine oder mehrere sich in vertikaler Richtung erstreckende Versteifungsrippen vorgesehen sein, um den Fahrradlenker besser gegen die Stützlast auszusteifen, mit der sich ein Benutzer auf dem Fahrradlenker abstützt.

Nach einer Ausgestaltung der Erfindung sind in dem Mittelabschnitt Anbau- und/oder Einbauräume für Funktionsbauteile ausgebildet. Durch entsprechende Anbau- und/oder Einbauräume kann die spätere Montage der Funktionsbauteile vereinfacht werden. Die Funktionsbauteile sind dabei bevorzugt witterungsgeschützt in den Fahrradlenker einbaubar, insbesondere deren elektrischen Anschlüsse, soweit vorhanden, dazu können gesonderte Abdeckungen und Deckel, transparent oder intransparent, vorgesehen sein, die ebenfalls bevorzugt maßgenau passend zu den Maßen der Anbau- und Einbauräume ausgebildet sind. Bei den Funktionsbauteilen kann es sich um elektrische und/oder elektronische Module handeln, die an einen Fahrradlenker angebaut werden, wie beispielsweise, aber nicht abschließend, Scheinwerfer, Tagfahrlichter, Bordcomputer, Bedien- oder Navigationsdisplays, elektrische oder elektronische Bedientasten oder mobile Telefone. Bei den Funktionsbauteilen kann es sich aber auch um Stecker, Kabelsätze, Bausteine zum Anschluss an ein lokales Busnetz wie beispielsweise ein CAN-Bus-Netz handeln, an die später die vorgenannten Funktionsbauteile oder weitere, auch fahrradseitig vorhandene elektronische Komponenten angeschlossen werden können. Die Anbau- und/oder Einbauräume können maßgenau passend ausgestaltet sein, um darin die jeweiligen Funktionsbauteile aufzunehmen. Für die spätere Montage der Funktionsbauteile können passgenaue Anschlüsse und Befestigungselemente wie Klemm-, Clips oder Rastverschlüsse bereits montagefertig in das einstückige Formteil eingeformt sein.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von oben auf einen Fahrradlenker,
- Fig. 2:: eine Explosionszeichnung mit einer Ansicht von schräg oben auf die in dem in Fig. 1 gezeigten Fahrradlenker verbauten Komponenten,
- Fig. 3:: eine Explosionszeichnung mit einer Ansicht von schräg unten auf die in dem in Fig. 1 gezeigten Fahrradlenker verbauten Komponenten,
- Fig. 4:: eine Seitensicht der Vorrichtung zur Verbindung eines Fahrradlenkers mit einem fahrradseitig montierten Steuerkopf, wobei der Mittelabschnitt in einer maximal nach vorne verlagerten Position gezeigt ist,
- Fig. 5:: die in Fig. 4 gezeigte Vorrichtung, bei der der Mittelabschnitt in einer maximal nach hinten verlagerten Position gezeigt ist, und
- Fig. 6:: eine Ansicht von schräg oben auf die Vorrichtung zur Verbindung eines Fahrradlenkers mit einem fahrradseitig montierten Steuerkopf.

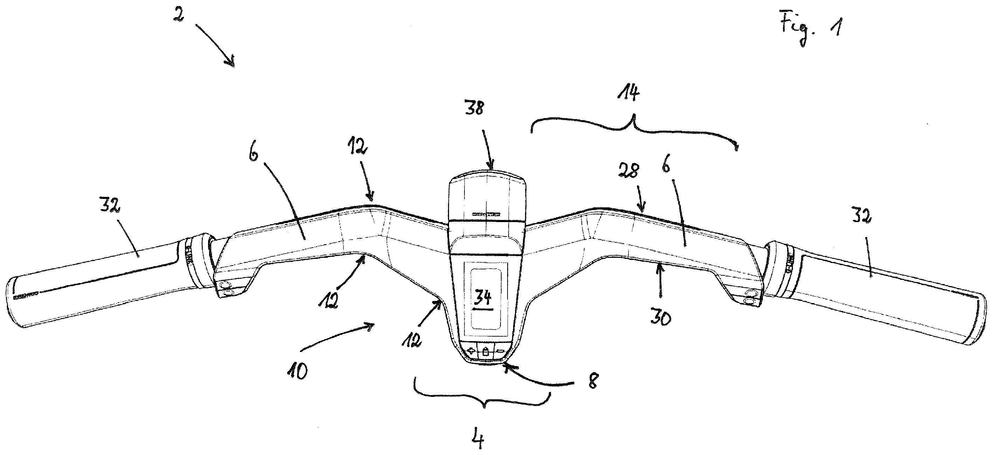

In Fig. 1 ist ein Fahrradlenker 2 aus einem faserverstärkten Kunststoff mit einem Lenkerkern gezeigt, der einen Mittelabschnitt 4 zur Verbindung mit einem Steuerkopf 8 und seitlich ausgerichteten, an gegenüberliegenden Seiten des Mittelabschnitts 4 ausgebildeten Lenkerarmen 6 aufweist. Der Mittelabschnitt 4 und die Lenkerarme 6 sind als einteiliges Formteil 10 aus einem faserverstärkten Kunststoff hergestellt. Der faserverstärkte Kunststoff weist einen Faser-Volumenanteil von mindestens 50 % auf.

In der in Fig. 1 gezeigten Ansicht ist gut erkennbar, dass die Übergangsbereiche 12 zwischen dem Mittelabschnitt 4 und den seitlichen Lenkerarmen 6 in einem kerbfreien bogenförmigen Verlauf ausgestaltet sind.

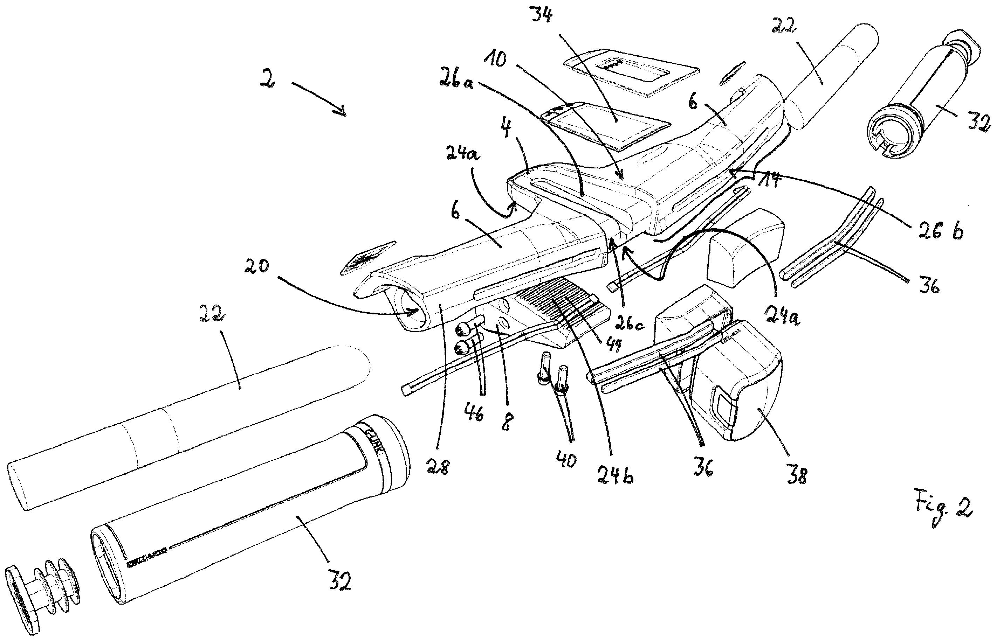

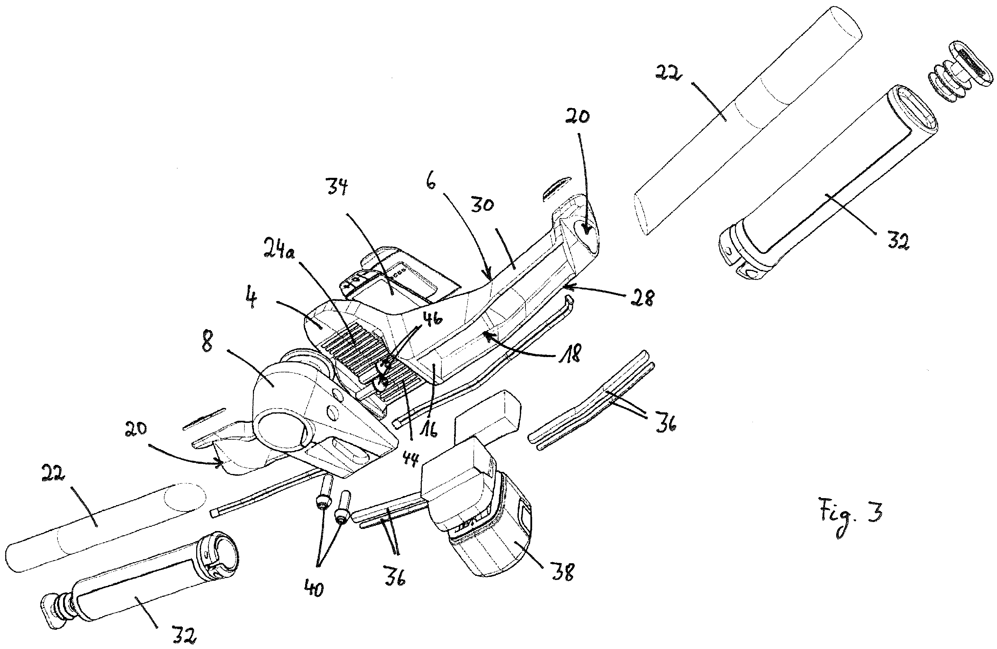

Die Lenkerarme 6 weisen jeweils in zumindest einem Abschnitt 14 einen in seinem Außenumfang unrund ausgestalteten Profilquerschnitt auf. Wie aus den Fig. 1 und 2 erkennbar ist, sind die nach oben weisenden Oberflächen und die in Fahrtrichtung weisenden Frontflächen der Lenkerarme 6 im Ausführungsbeispiel abgeflacht, aber immer noch leicht gewölbt und annähernd in einem rechten Winkel zueinander angeordnet, so dass sich im gezeigten Ausführungsbeispiel ein zumindest annähernd kastenförmiges Querschnittsprofil ergibt. Wie in der Fig. 3 zu erkennen ist, ist die Frontfläche 28 und die Rückwand 30 jeweils aus einer Fläche einer Versteifungsrippe 16 gebildet. Die beiden Versteifungsrippen 16 begrenzen zwischen sich jeweils einen nach unten offenen Hohlraum 18. Nach oben hin sind die Hohlräume 18 durch die Oberseite des Lenkerarms 6 geschlossen. Die Versteifungsrippen 16 können über ihre Länge hinweg und über den Profilquerschnitt der Lenkerarme 6 verteilt unterschiedlich dicke Wandstärken aufweisen.

In den Fig. 2 und 3 ist zu erkennen, dass die Lenkerarme 6 an ihren äußeren Enden jeweils eine Aufnahmeöffnung 20 zur Aufnahme einer Verlängerungsstange 22 aufweisen. Im gezeigten Ausführungsbeispiel weisen zumindest die Verlängerungsstangen 22 abschnittweise jeweils einen in seinem Außenumfang kreisrunden Profilquerschnitt auf. Auf die Verlängerungsstangen 22 werden im Ausführungsbeispiel die Handgriffe 32 aufgesetzt.

In den Fig. 2 und 3 ist zu erkennen, dass in dem einstückigen Formteil 10 Anbau- und/oder Einbauräume 26 für Funktionsbauteile ausgebildet sind. So kann beispielsweise in den Einbauraum 26a ein Display 34 eingesetzt werden. Zusätzlich ist in den Fig. 2 und 3 noch eine Abdeckscheibe gezeigt, die den Einbauraum 26a nach ihrer Montage dichtend abdeckt. In die Einbauräume 26b können die Tagfahrlichter 36 eingesetzt werden, die aus LED-Lichtleisten gebildet sind. An den Anbauraum 26c kann der Scheinwerfer 38 angebaut werden.

Am Mittelabschnitt 4 ist eine Verspannungsfläche 24a für die Verbindung mit einem Steuerkopf 8 ausgebildet. Die am Mittelabschnitt 4 ausgebildete Verspannungsfläche 24a korrespondiert zu einer Verspannungsfläche 24b, die an dem Steuerkopf 8 ausgebildet ist, der mit dem zeichnerisch nicht dargestellten Gabelschaftrohr der Vorderradgabel verbunden ist. Beide Verspannungsflächen 24a, 24b sind gerippt ausgeführt, so dass sie nicht in Längsrichtung zueinander verschieblich sind, wenn sie aufeinanderliegen. In ihrer Einbaulage sind sie mit einer Spannschraube gegeneinander verspannt. Die Verspannungsflächen 24a, 24b sind so ausgebildet, dass die Verspannungsfläche 24a des Fahrradlenkers 2 nicht genau in Längsrichtung mittenzentriert auf der Verspannungsfläche 24b aufliegen muss, sondern auch um einige Rippen nach vorne oder hinten verlagert auf der Verspannungsfläche 24b aufliegen kann. Dadurch ist es möglich, den Fahrradlenker 2 um einige cm nach vorne oder hinten verlagert auf einem Fahrrad zu montieren.

Der Mittelabschnitt 4 und der Steuerkopf 8 werden durch zwei in Fig. 3 gezeigte Spannschrauben 46 miteinander verschraubt, die nach ihrer Montage die Verspannungsflächen 24a, 24b durchgreifen. Der Steuerkopf 8 hat im gezeigten Ausführungsbeispiel ein Langloch 48, das sich in Längserstreckungsrichtung des Fahrrads erstreckt. Das Langloch 48 wird nach der Montage von den Spannschrauben 46 durchgriffen, mit der dann der Mittelabschnitt 4 und der Steuerkopf 8 miteinander verschraubt sind.

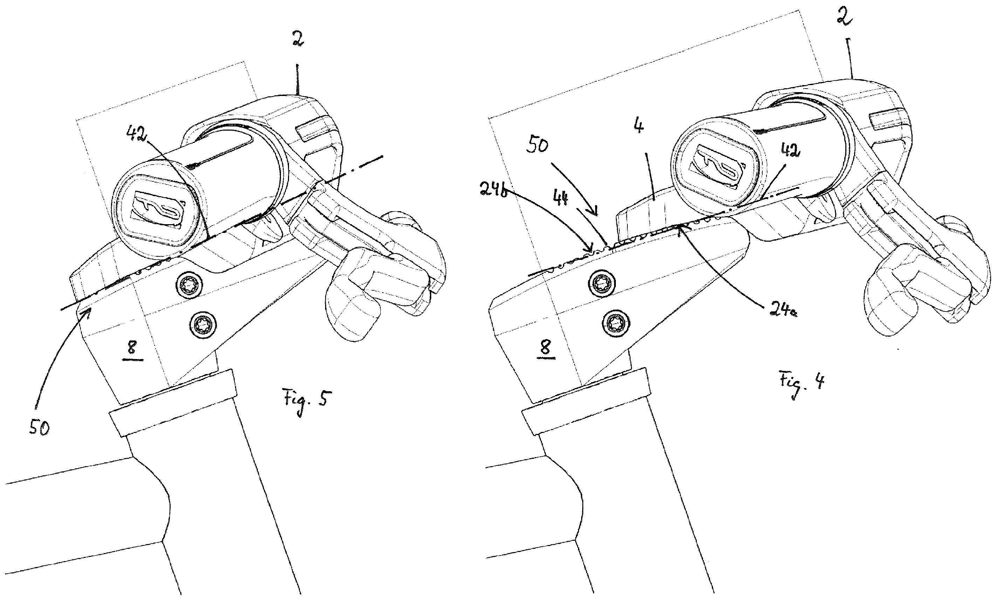

In Fig. 4 ist eine Seitensicht der Vorrichtung 50 zur Verbindung eines Fahrradlenkers 2 mit einem fahrradseitig montierten Steuerkopf 8 gezeigt, wobei der Mittelabschnitt 4 in einer maximal nach vorne verlagerten Position gezeigt ist. Die Vorrichtung 50 weist eine erste Verspannungsfläche 24a und eine zweite Verspannungsfläche 24b auf. Die erste Verspannungsfläche 24a ist auf der Unterseite des Mittelabschnitts 4 und die zweite Verspannungsfläche 24b ist auf der Oberseite des Steuerkopfes 8 ausgebildet. Die beiden Verspannungsflächen 24a, 24b sind in der gezeigten Gebrauchsstellung des Fahrradlenkers 2 durch ein Spannmittel 40 mit einer Spannkraft aufeinander gepresst gehalten. Die beiden Verspannungsflächen 24a, 24b schaffen mit ihrer räumlichen Lage in der Gebrauchsstellung des Fahrradlenkers 2 eine zumindest überwiegend waagerecht ausgerichtete Kontaktebene 42, die plan oder wie im Ausführungsbeispiel gezeigt auch einen leicht gekrümmten Verlauf haben kann. Über die Kontaktebene 42 werden die zwischen dem Fahrradlenker 2 und dem Gabelschaft zu übertragenden Kräfte übertragen.

In Fig. 5 ist die in Fig. 4 gezeigte Vorrichtung 50 mit einem Mittelabschnitt 4 gezeigt, der sich in einer maximal nach hinten verlagerten Position befindet. Aus dem Vergleich der Fig. 4 und 5 ist erkennbar, dass der Mittelabschnitt 4 mit der ersten Verspannungsfläche 24a in verschiedenen Positionen entlang der Kontaktebene 42 auf der zweiten Verspannungsfläche 24b aufsetzbar ist, wobei sich in den verschiedenen Positionen die Verspannungsflächen 24a, 24b in unterschiedlichen Flächenbereichen überlappen.

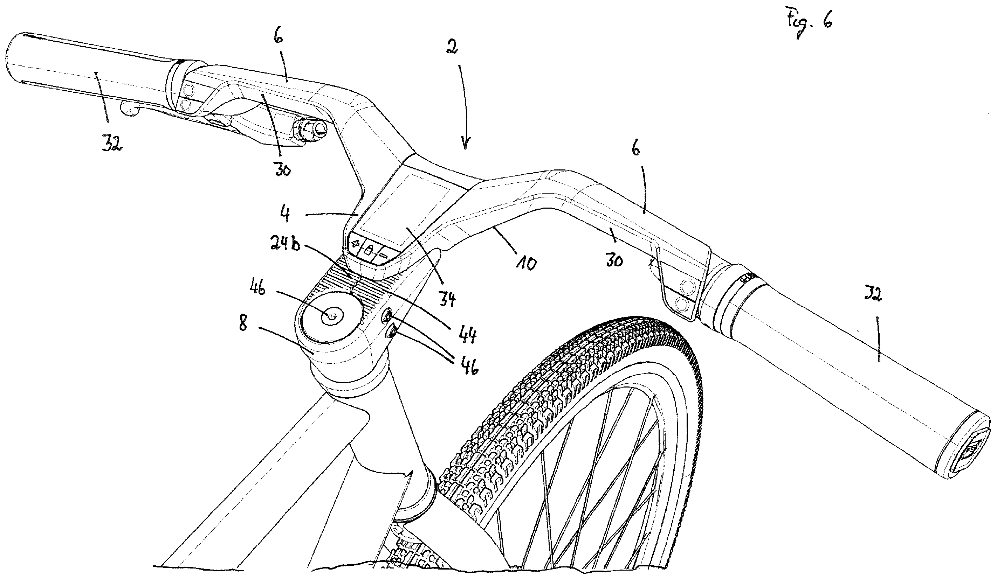

In Fig. 6 ist eine Ansicht von schräg oben auf die Vorrichtung 50 zur Verbindung eines Fahrradlenkers 4 mit einem fahrradseitig montierten Steuerkopf 8 dargestellt. Die Verspannungsflächen 24a, 24b weisen eine zueinander kongruente Verrippung 44 auf, die sich in einer Richtung quer zur Längserstreckungsrichtung des Fahrrads erstreckt. In der Ansicht in Fig. 6 ist erkennbar, dass zumindest die Verspannungsfläche 24b in der Kontaktebene 42 geschlossen ausgeführt ist. Der Steuerkopf 8 ist von einer Spannschraube 46 auf dem Gabelschaft verspannt gehalten. Der Steuerkopf 8 weist mit den beiden seitlichen Spannschrauben 46 zumindest ein weiteres Spannmittel 40 auf, mit dem der Steuerkopf 8 quer und seitlich versetzt zur Drehachse der Vorderradgabel auf dem Gabelschaft verspannt ist.

Die Erfindung ist nicht auf das vorstehend beschriebene Ausführungsbeispiel beschränkt. Dem Fachmann bereitet es keine Schwierigkeiten, das Ausführungsbeispiel auf eine ihm geeignet erscheinende Weise abzuwandeln, innerhalb des Anwendungsbereichs des beigefügten Anspruchssatzes, um es an einen konkreten Anwendungsfall anzupassen.

### Bezugsziffernliste

- 2: Fahrradlenker
- 4: Mittelabschnitt
- 6: Lenkerarm
- 8: Steuerkopf
- 10: Formteil
- 12: Übergangsbereich
- 14: Abschnitt
- 16: Versteifungsrippe
- 18: Hohlraum
- 20: Aufnahmeöffnung
- 22: Verlängerungsstange
- 24: Verspannungsfläche
- 26: Anbau- und/oder Einbauraum
- 28: Frontfläche
- 30: Rückwand
- 32: Handgriff
- 34: Display
- 36: Tagfahrlicht
- 38: Scheinwerfer
- 40: Spannmittel
- 42: Kontaktebene
- 44: Verrippung
- 46: Spannschraube
- 50: Vorrichtung

## Patentansprüche

1. Vorrichtung (50) zur Verbindung eines aus einem faserverstärkten Kunststoff hergestellten Fahrradlenkers (2) mit einem fahrradseitig zu montierenden Steuerkopf (8), wobei der Fahrradlenker (2) einen Mittelabschnitt (4) und seitlich ausgerichtete, an gegenüberliegenden Seiten des Mittelabschnitts (4) ausgebildete Lenkerarme (6) aufweist, die Vorrichtung (50) eine erste Verspannungsfläche (24a) und eine zweite Verspannungsfläche (24b) aufweist, wobei die erste Verspannungsfläche (24a) auf der Unterseite des Mittelabschnitts (4) und die zweite Verspannungsfläche (24b) auf der Oberseite des Steuerkopfes (8) ausgebildet sind, die beiden Verspannungsflächen (24a, 24b) in der Gebrauchsstellung des Fahrradlenkers (2) durch ein Spannmittel (40) mit einer Spannkraft aufeinander gepresst gehalten sind, und die beiden Verspannungsflächen (24a, 24b) mit ihrer räumlichen Lage in der Gebrauchsstellung des Fahrradlenkers (2) eine zumindest überwiegend waagerecht ausgerichtete Kontaktebene (42) schaffen, über die die zwischen dem Fahrradlenker (2) und dem Gabelschaft zu übertragenden Kräfte übertragen werden, **dadurch gekennzeichnet, dass** die Lenkerarme (6) jeweils abschnittweise einen teilweise oder vollständig umschlossenen Hohlraum (18) mit über den Profilquerschnitt unterschiedlich dicken Wandstärken der Außenwände aufweisen.

2. Vorrichtung (50) nach Anspruch 1, **dadurch gekennzeichnet, dass** der Mittelabschnitt (4) mit der ersten Verspannungsfläche (24a) in verschiedenen Positionen entlang der Kontaktebene (42) auf der zweiten Verspannungsfläche (24b) aufsetzbar ist, wobei sich in den verschiedenen Positionen die Verspannungsflächen (24a, 24b) in unterschiedlichen Flächenbereichen überlappen.

3. Vorrichtung (50) nach Anspruch 1 oder 2, **dadurch gekennzeichnet, dass** die Verspannungsflächen (24a, 24b) eine zueinander kongruente Verrippung (44) aufweisen, die sich in einer Richtung quer zur Längserstreckungsrichtung des Fahrrads erstreckt.

4. Vorrichtung (50) nach einem der vorhergehenden Ansprüche, **dadurch gekennzeichnet, dass** die Verspannungsflächen (24a, 24b) in der Kontaktebene (42) geschlossen ausgeführt sind.

5. Vorrichtung (50) nach einem der vorhergehenden Ansprüche, **dadurch gekennzeichnet, dass** der Steuerkopf (8) von einer Spannschraube (46) auf dem Gabelschaft verspannt gehalten ist.

6. Vorrichtung (50) nach Anspruch 5, **dadurch gekennzeichnet, dass** der Steuerkopf (8) zumindest ein weiteres Spannmittel (40) aufweist, mit dem der Steuerkopf (8) quer und seitlich versetzt zur Drehachse der Vorderradgabel auf dem Gabelschaft verspannt ist.

7. Vorrichtung (50) nach einem der vorhergehenden Ansprüche, **dadurch gekennzeichnet, dass** der Mittelabschnitt (4) und der Steuerkopf (8) durch zumindest eine Spannschraube (46) miteinander verschraubt sind, die die Verspannungsflächen (24a, 24b) durchgreift.

8. Vorrichtung (50) nach Anspruch 7, **dadurch gekennzeichnet, dass** der Mittelabschnitt (4) und/oder der Steuerkopf (8) ein Langloch (48) aufweist, das sich in Längserstreckungsrichtung des Fahrrads erstreckt, und das Langloch (48) von der Spannschraube (46) durchgriffen ist, mit der der Mittelabschnitt (4) und der Steuerkopf (8) miteinander verschraubt sind.

9. Vorrichtung (50) nach einem der vorhergehenden Ansprüche, **dadurch gekennzeichnet, dass** der Mittelabschnitt (4) und die Lenkerarme (6) als einteiliges Formteil (10) aus einem faserverstärkten Kunststoff hergestellt sind, der einen Faser-Volumenanteil von mindestens 50 % aufweist.

10. Vorrichtung (50) nach einem der vorhergehenden Ansprüche, **dadurch gekennzeichnet, dass** der Mittelabschnitt (4) einen unrunden Profilquerschnitt aufweist und im unrunden Profilquerschnitt in Hauptbelastungsrichtung wirkende Versteifungsrippen (16) ausgebildet sind, die dazwischen befindliche Hohlräume (18) begrenzen.

11. Vorrichtung (50) nach einem der vorhergehenden Ansprüche, **dadurch gekennzeichnet, dass** in dem Mittelabschnitt (4) Anbau- und/oder Einbauräume (26) für Funktionsbauteile ausgebildet sind.

12. Fahrradlenker (2) mit Steuerkopf (8), **dadurch gekennzeichnet, dass** die Kombination des Fahrradlenkers (2) mit einem Steuerkopf (8) eine Vorrichtung (50) nach den Merkmalen der Ansprüche 1 bis 12 aufweist.

## Claims

1. Device (50) for connecting a bicycle handlebar (2) made of a fiber-reinforced plastic to a control head (8) to be mounted on the bicycle, the bicycle handlebar (2) having a central section (4) and laterally aligned handlebar arms (6) formed on opposite sides of the central section (4), the device (50) has a first clamping surface (24a) and a second clamping surface (24b), wherein the first clamping surface (24a) is formed on the underside of the center section (4) and the second clamping surface (24b) is formed on the upper side of the control head (8), the two clamping surfaces (24a, 24b) are held pressed against one another with a clamping force by a clamping means (40) in the position of use of the bicycle handlebar (2), and the two clamping surfaces (24a, 24b) with their spatial position in the position of use of the bicycle handlebar (2) create an at least predominantly horizontally aligned contact plane (42), via which the forces to be transmitted between the bicycle handlebar (2) and the steer tube are transmitted, **characterized in that** the handlebar arms (6) each have a partially or completely enclosed hollow space (18) in sections with wall thicknesses of the outer walls which vary over the profile cross-section.

2. Device (50) according to claim 1, **characterized in that** the central section (4) can be placed with the first clamping surface (24a) in different positions along the contact plane (42) on the second clamping surface (24b), wherein in the different positions the clamping surfaces (24a, 24b) overlap in different surface areas.

3. Device (50) according to claim 1 or 2, **characterized in that** the clamping surfaces (24a, 24b) have a ribbing (44) which is congruent with one another and extends in a direction transverse to the longitudinal direction of extension of the bicycle.

4. Device (50) according to one of the preceding claims, **characterized in that** the clamping surfaces (24a, 24b) are designed to be closed in the contact plane (42).

5. Device (50) according to one of the preceding claims, **characterized in that** the control head (8) is held clamped on the steer tube by a clamping screw (46).

6. Device (50) according to claim 5, **characterized in that** the control head (8) has at least one further clamping means (40) with which the control head (8) is clamped on the steer tube transversely and laterally offset to the rotation axis of the front wheel fork.

7. Device (50) according to one of the preceding claims, **characterized in that** the central section (4) and the control head (8) are screwed together by at least one clamping screw (46) which engages through the clamping surfaces (24a, 24b).

8. Device (50) according to claim 7, **characterized in that** the central section (4) and/or the control head (8) has an elongated hole (48) which extends in the longitudinal direction of the bicycle, and the elongated hole (48) is penetrated by the clamping screw (46) with which the central section (4) and the control head (8) are screwed together.

9. Device (50) according to one of the preceding claims, **characterized in that** the central section (4) and the handlebar arms (6) are made as a one-piece molded part (10) from a fiber-reinforced plastic which has a fibre volume fraction of at least 50%.

10. Device (50) according to one of the preceding claims, **characterized in that** the central section (4) has a non-circular profile cross-section and stiffening ribs (16) acting in the main loading direction are formed in the non-circular profile cross-section and delimit cavities (18) located therebetween.

11. Device (50) according to one of the preceding claims, **characterized in that** attachment and/or installation spaces (26) for functional components are formed in the central section (4).

12. Bicycle handlebar (2) with control head (8), **characterized in that** the combination of the bicycle handlebar (2) with a control head (8) comprises a device (50) according to the features of claims 1 to 12.

## Revendications

1. Dispositif (50) pour relier un guidon de bicyclette (2) fabriqué en une matière plastique renforcée par des fibres à une tête de commande (8) à monter côté bicyclette, le guidon de bicyclette (2) présentant une section centrale (4) et des bras de guidon (6) orientés latéralement, réalisés sur des côtés opposés de la section centrale (4), le dispositif (50) présentant une première surface de serrage (24a) et une deuxième surface de serrage (24b), la première surface de serrage (24a) étant réalisée sur le côté inférieur de la section centrale (4) et la deuxième surface de serrage (24b) étant réalisée sur le côté supérieur de la tête de commande (8), les deux surfaces de serrage (24a, 24b) étant maintenues pressées l'une contre l'autre avec une force de serrage par un moyen de serrage (40) dans la position d'utilisation du guidon de bicyclette (2), et les deux surfaces de serrage (24a, 24b) créant avec leur emplacement spatial dans la position d'utilisation du guidon de bicyclette (2) un plan de contact (42) orienté au moins principalement à l'horizontale, par l'intermédiaire duquel les forces à transmettre entre le guidon de bicyclette (2) et le tube de fourche sont transmises, **caractérisé en ce que** les bras de guidon (6) présentent chacun, par sections, un espace creux (18) partiellement ou entièrement entouré avec des épaisseurs de paroi des parois extérieures différentes sur la section transversale de profil.

2. Dispositif (50) selon la revendication 1, **caractérisé en ce que** la section centrale (4) peut être posée avec la première surface de serrage (24a) dans différentes positions le long du plan de contact (42) sur la deuxième surface de serrage (24b), les surfaces de serrage (24a, 24b) se chevauchant dans les différentes positions dans des zones de surface différentes.

3. Dispositif (50) selon la revendication 1 ou 2, **caractérisé en ce que** les surfaces de serrage (24a, 24b) présentent une nervure (44) congruente entre elles, qui s'étend dans une direction transversale à la direction d'extension longitudinale de la bicyclette.

4. Dispositif (50) selon l'une quelconque des revendications précédentes, **caractérisé en ce que** les surfaces de serrage (24a, 24b) sont configurées fermées dans le plan de contact (42).

5. Dispositif (50) selon l'une quelconque des revendications précédentes, **caractérisé en ce que** la tête de commande (8) est maintenue serrée sur le tube de fourche par une vis de serrage (46).

6. Dispositif (50) selon la revendication 5, **caractérisé en ce que** la tête de commande (8) présente au moins un autre moyen de serrage (40), avec lequel la tête de commande (8) est serrée sur le tube de fourche, transversalement et décalée latéralement par rapport à l'axe de rotation de la fourche de roue avant.

7. Dispositif (50) selon l'une quelconque des revendications précédentes, **caractérisé en ce que** la section centrale (4) et la tête de commande (8) sont vissées l'une à l'autre par au moins une vis de serrage (46) qui traverse les surfaces de serrage (24a, 24b).

8. Dispositif (50) selon la revendication 7, **caractérisé en ce que** la section centrale (4) et/ou la tête de commande (8) présente un trou oblong (48) qui s'étend dans la direction d'extension longitudinale de la bicyclette, et le trou oblong (48) est traversé par la vis de serrage (46) avec laquelle la section centrale (4) et la tête de commande (8) sont vissées ensemble.

9. Dispositif (50) selon l'une quelconque des revendications précédentes, **caractérisé en ce que** la section centrale (4) et les bras de guidon (6) sont fabriqués sous forme de pièce moulée (10) d'un seul tenant en une matière plastique renforcée par des fibres, qui présente un pourcentage volumique de fibres d'au moins 50 %.

10. Dispositif (50) selon l'une quelconque des revendications précédentes, **caractérisé en ce que** la section centrale (4) présente une section transversale de profil non circulaire et des nervures de renforcement (16) agissant dans la direction principale de sollicitation sont réalisées dans la section transversale de profil non circulaire, qui délimitent des espaces creux (18) se trouvant entre elles.

11. Dispositif (50) selon l'une quelconque des revendications précédentes, **caractérisé en ce que** des espaces de montage et/ou d'installation (26) pour des composants fonctionnels sont réalisés dans la section centrale (4).

12. Guidon de bicyclette (2) avec tête de commande (8), **caractérisé en ce que** la combinaison du guidon de bicyclette (2) avec une tête de commande (8) présente un dispositif (50) selon les caractéristiques des revendications 1 à 12.
